# EUROPEAN PATENT SPECIFICATION

(11) **EP 3 075 293 B1**
(45) Date of publication and mention of the grant of the patent: **16.08.2017**
(21) Application number: 16153920.0
(22) Date of filing: 02.02.2016
(51) Int. Cl.: A47J 37/10, A47J 37/06

(54) **DIRECT-HEAT GRILLING PAN AND METHOD OF MANUFACTURING THE SAME**
DIREKTWÄRME-GRILLPFANNE UND VERFAHREN ZUR HERSTELLUNG DAVON
BAC DE GRILLADE À CHALEUR DIRECTE ET SON PROCÉDÉ DE FABRICATION

(30) Priority: 01.04.2015 KR 20150046190
(43) Date of publication of application: 05.10.2016
(73) Proprietor: Chang Bo Co Ltd, Daegu 42718 (KR); Kim, Tae Suck, Daegu 42715 (KR); Kim, Jung Wook, Daegu 42718 (KR)
(72) Inventor: KIM, Tae Suck, Daegu 42715 (KR); KIM, Jung Wook, Daegu 42718 (KR)
(74) Representative: Loyer & Abello

(56) References cited:
- WO-A1-2012/083063
- US-A- 3 457 852

## Description

### BACKGROUND

### 1. Field

One or more exemplary embodiments relate to a direct heat grilling pan, and more particularly, to a direct-heat grilling pan used to grill food, such as meat or fish, in a direct heating manner and a method of manufacturing the direct-heat grilling pan.

### 2. Description of the Related Art

Generally, food such as meat or fish may be grilled in a direct heating manner by letting the food directly contact fire from a heating means such as a gas stove or charcoal fire and an indirect heating manner by indirectly heating the food on a grilling pan heated by fire from a heating means. For instance, it is known from document US3,457,852 a reversible multiple cooking oven, steamer, grill and griddle or, from document WO2012/083063 A1, a cooking grate and cooking apparatus.

The direct-heating manner is preferred because the taste and flavor of the grilled meat are good and the grilled meat has a barbecue flavor. To this end, various direct-heat grilling pans have been sold in the market to enable consumers to grill food at home in this manner.

Multiple holes are formed in a direct-heat grilling pan for allowing fire from a heating means such as a gas stove or charcoal fire to pass therethrough. However, oil generated from meat drips down through the holes, thereby contaminating the gas stove or directly contacting the fire and thus starting to burn. Thus, smoke and soot are generated.

To solve these problems, a direct-heat grilling pan which has a dual structure for preventing oil generated from meat from dripping down to a heating means by disposing a separate oil-receiving plate under the grilling pan has been proposed. Korean Utility Model Gazette No. 20-0401810 discloses an example of a dual-structure direct-heat grilling pan having a double structure.

However, a conventional dual-structure direct-heat grilling pan is made by processing two metallic plates to manufacture a grilling plate and an oil-receiving plate and by vertically coupling the plates, which results in a high manufacturing cost and a complex configuration because of a part for coupling the two plates.

Moreover, the conventional dual-structure direct-heat grilling pan is structured such that two separate plates are disposed vertically, which affects the smooth heat conduction and thus degrades the heat efficiency.

Furthermore, in case of the conventional dual-structure direct-heat grilling pan, oil or food may reach a coupling part between the two plates, and washing it may be difficult. In addition, a process of separating the two plates for washing is cumbersome and time-consuming.

### SUMMARY

One or more exemplary embodiments include a direct-heat grilling pan having a dual-structure bottom plate formed integrally by processing one metallic plate, and a method for manufacturing the direct-heat grilling pan.

Additional aspects will be set forth in part in the description which follows and, in part, will be apparent from the description, or may be learned by practice of the presented embodiments.

According to one or more exemplary embodiments, a direct-heat grilling pan includes a bottom plate and a sidewall formed on a circumference of the bottom plate, In which the bottom plate includes multiple upper supports disposed with a first horizontal interval therebetween, multiple lower supports disposed with a second horizontal interval therebetween, disposed with a vertical interval from the multiple upper supports and positioned directly under the first horizontal interval, having a width greater than the first horizontal interval, and having concave oil-dripping grooves formed in top surfaces thereof to receive oil dripping down through the first horizontal interval, and an edge portion surrounding the multiple upper supports and the multiple lower supports while connecting both end portions of the multiple upper supports and both end portions of the multiple lower supports, and on a top surface in which a concave oil-receiving groove connected to the oil-dripping grooves is formed, in which the bottom plate and the sidewall are formed integrally of a single metallic plate.

Top surfaces of the multiple upper supports may be convex and a width of the upper supports may be greater than the first horizontal interval.

A width of the oil-dripping grooves may be equal to or greater than the first horizontal interval.

The multiple upper supports and the multiple lower supports may be formed inclinedly so that heights are lower in a direction from longitudinal centers of the multiple upper supports and the multiple lower supports toward the both end portions of the multiple upper supports and the multiple lower supports.

A bottom surface of the oil-receiving groove may be lower than the oil-dripping grooves.

The bottom plate may have a circular shape or a quadrilateral shape with round corners.

A handle portion may be formed to protrude outward from an upper end portion of the sidewall or may be attached to an outer surface of the sidewall

According to one or more exemplary embodiments, a method of manufacturing the direct-heat grilling pan includes forming multiple holes in a slot shape in parallel with each other and with an interval therebetween in a center portion except for an edge portion of a metallic plate, thereby alternately forming one by one multiple first portions and multiple second portions having the multiple holes therebetween, providing a lower mold and an upper mold, disposing the metallic plate between the lower mold and the upper mold, and lifting the lower mold or lowering the upper mold to transform the metallic plate by pressing the metallic plate to form the bottom plate and the sidewall, in which in the forming the bottom plate and the sidewall, the multiple first portions of the metallic plate have a width that increases as the multiple first portions are pressed in a position higher than the multiple second portions, thereby forming multiple upper supports of the bottom plate, and the multiple second portions of the metallic plate have a width that increases beyond the first horizontal interval as the multiple second portions are pressed in a position lower than the multiple first portions, such that top surfaces of the multiple second portions are transformed to have a concave shape and form oil-dripping grooves with multiple lower supports of the bottom plate, and the edge portion of the metallic plate is transformed to have a concave shape by being pressed to form the oil-receiving groove, the sidewall, and the edge portion of the bottom plate.

The metallic plate may have a circular shape or a quadrilateral shape with round corners, and the width of the first portions of the metallic plate and the width of the second portions of the metallic plate may be greater than a width of the multiple holes.

The providing of the lower mold and the upper mold may include alternately forming one by one multiple first lower pressing faces and concave multiple second lower pressing faces on a top surface of the lower mold and forming a concave third lower pressing face on circumferences of the multiple first lower pressing faces and the multiple second lower pressing faces and alternately forming one by one multiple first upper pressing faces corresponding to the multiple first lower pressing faces and convex multiple second upper pressing faces corresponding to the multiple second lower pressing faces on a bottom surface of the upper mold and forming a convex third upper pressing face corresponding to the third lower pressing face on circumferences of the multiple first upper pressing faces and the multiple second upper pressing faces.

The disposing of the metallic plate between the lower mold and the upper mold may include disposing the metallic plate such that a center of the multiple first portions of the metallic plate is on a central line of the first lower pressing faces and the first upper pressing faces and a center of the multiple second portions of the metallic plate is on a central line of the second lower pressing faces and the second upper pressing faces.

The first lower pressing faces may be convex and the first upper pressing faces may be concave, such that top surfaces of the multiple upper supports are convex.

A width of the second lower pressing faces may be equal to a width of the lower supports, a width of the first lower pressing faces may be equal to the second horizontal interval, a width of the first upper pressing faces may be equal to a width of the upper supports, and a width of the second upper pressing faces may be equal to the first horizontal interval.

Convex protrusions may be formed in a center of the first lower pressing faces and a center of the second lower pressing faces.

The protrusions may extend in a longitudinal direction of the first lower pressing faces and the second lower pressing faces and may have a height less than a half of a thickness of the metallic plate.

### BRIEF DESCRIPTION OF THE DRAWINGS

These and/or other aspects will become apparent and more readily appreciated from the following description of the embodiments, taken in conjunction with the accompanying drawings in which:
FIG. 1 is a plan view of a direct-heat grilling pan according to an embodiment of the present disclosure;
FIG. 2 is a vertical cross-sectional view of a direct-heat grilling pan cut along a line A - A' shown in FIG. 1;
FIG. 3 is a vertical cross-sectional view of a direct-heat grilling pan, cut along a line B - B' shown in FIG. 1;
FIG. 4 is a plan view of a direct-heat grilling pan according to another embodiment of the present disclosure;
FIG. 5 is a vertical cross-sectional view of a direct-heat grilling pan cut along a line C - C' shown in FIG. 4;
FIG. 6 is a vertical cross-sectional view of a direct-heat grilling pan cut along a line D - D' shown in FIG. 4;
FIG. 7 is a plan view of a metallic plate for manufacturing a direct-heat grilling pan shown in FIGS. 1 through 3;
FIG. 8 is a plan view of a metallic plate for manufacturing a direct-heat grilling pan shown in FIGS. 3 through 6;
FIG. 9 is a plan view of a lower mold and an upper mold for forming a direct-heat grilling pan shown in FIGS. 1 through 3;
FIG. 10 is a cross-sectional view showing a state wherein a metallic plate shown in FIG. 7 is transformed by being pressed between a lower mold and an upper mold shown in FIG. 9 and thus a direct-heat grilling pan as shown in FIGS. 1 through 3 is formed; and
FIG. 11 is a view for describing an intermediate process in which an upper support and a lower support for a bottom plate are formed from a first part and a second part of a metallic plate.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the exemplary embodiments are merely described below, by referring to the figures, to explain aspects of the present description.

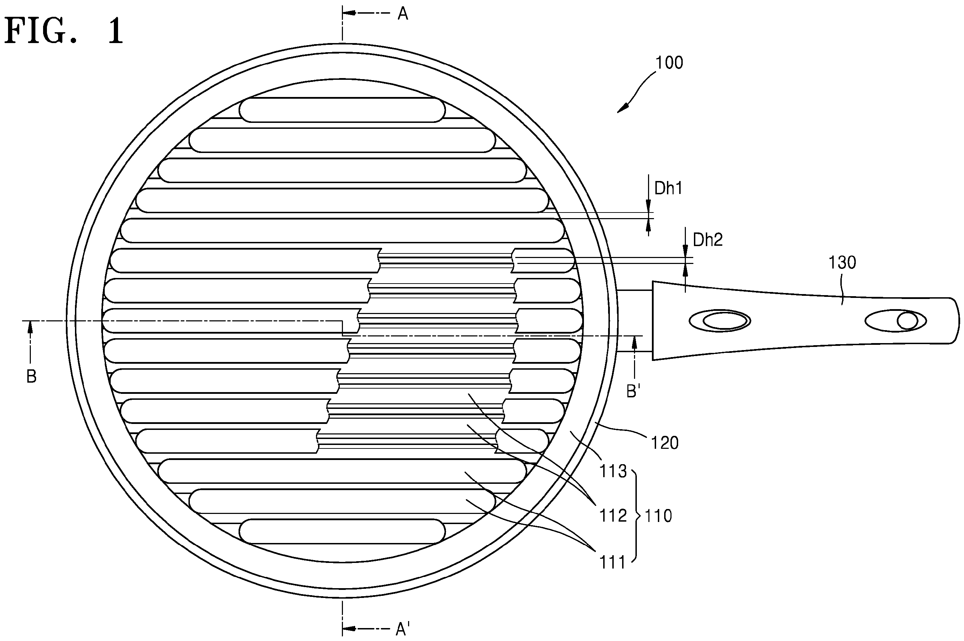

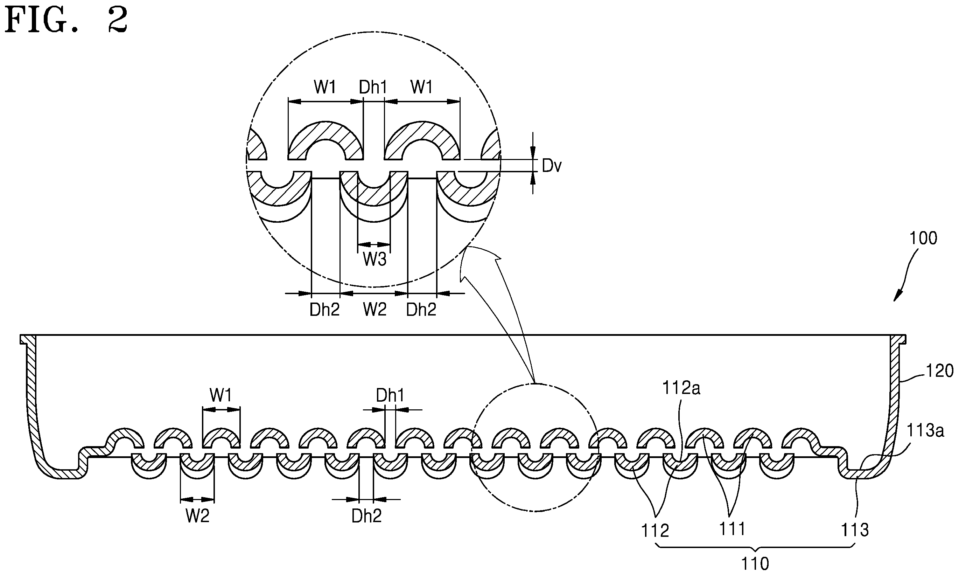

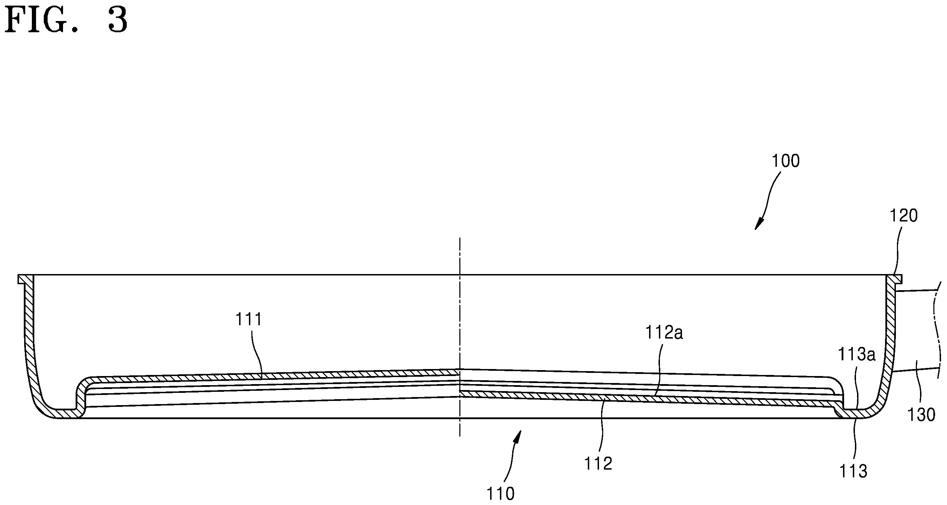

FIG. 1 is a plan view of a direct-heat grilling pan according to an embodiment of the present disclosure, FIG. 2 is a vertical cross-sectional view of a direct-heat grilling pan, cut along a line A - A' shown in FIG. 1, and FIG. 3 is a vertical cross-sectional view of a direct-heat grilling pan, cut along a line B - B' shown in FIG. 1.

Referring to FIGS. 1 through 3, a direct-heat grilling pan 100 according to an embodiment of the present disclosure, which is a cooking container used to grill food such as meat or fish in a direct-heating manner, may include a bottom plate 110 having a dual structure including a single metallic plate and a sidewall 120 formed around a circumference of the bottom plate 110.

More specifically, the bottom plate 110 may include multiple upper supports 111, multiple lower supports 112 disposed under the multiple upper supports 111, and an edge portion 113 surrounding the multiple upper supports 111 and the lower supports 112. The multiple upper supports 111, the multiple lower supports 112, and the edge portion 113 are formed integrally of a single metallic plate, for example, an aluminum plate.

The multiple upper supports 111 support food on top surfaces thereof on which the food is placed. The multiple upper supports 111 are disposed in parallel with one another, with a first horizontal interval Dh1 therebetween, each of the multiple upper supports 111 having a bar shape with a length greater than a width W1 thereof.

The width W1 is greater than the first horizontal interval Dh1. The top surface of the upper support 111 may be flat, but may also be convex so that oil generated from food can naturally run down thereon.

The multiple lower supports 112 receive the oil running down through the first horizontal intervals Dh1 between the multiple upper supports 111. On top surfaces of the multiple lower supports 112, concave oil-dripping grooves 112a are formed. The multiple lower supports 112 are disposed in parallel with one another, having a second horizontal interval Dh2 therebetween, and each of the multiple lower supports 112 having a bar shape with a length greater than a width W2 thereof.

The multiple lower supports 112 are disposed with a predetermined vertical interval Dv under the multiple upper supports 111. In particular, the multiple lower supports 112 are disposed directly under the first horizontal intervals Dh1 between the multiple upper supports 111. That is, the multiple upper supports 111 and the multiple lower supports 112 are alternately disposed to form an upper-lower dual structure.

The width W2 of the lower support 112 may be greater than the first horizontal interval Dh1 to entirely receive the oil running down through the first horizontal interval Dh1, and in particular, a width W3 of the oil-dripping groove 112a formed on the top surface of the lower support 112 may be equal to or greater than the first horizontal interval Dh1.

In the bottom plate 110 structured as described above, a fire of a heating means such as a gas stove or a charcoal fire sequentially passes through the second horizontal intervals Dh2 between the multiple lower supports 112, the vertical intervals Dv between the multiple lower supports 112 and the multiple upper supports 111, and the first horizontal intervals Dh1 between the multiple upper supports 111, directly contacting food placed on the top surfaces of the upper supports 111 and thus grilling the food in a direct-heating manner.

The oil dripping down through the first horizontal intervals Dh1 between the multiple upper supports 111 is received by the oil-dripping grooves 112a formed on the top surfaces of the multiple lower supports 112 installed directly under the first horizontal intervals Dh1, preventing the oil dripping down from contaminating the gas stove or from generating smoke or soot by directly contacting the fire and being burnt.

The edge portion 113 is formed to surround the multiple upper supports 111 and the multiple lower supports 112, and both end portions of the upper supports 111 and both end portions of the lower supports 112 are connected to the edge portion 113. The bottom plate 110 may be formed in a circular shape, such that the edge portion 113 may also be formed in a circular ring-shape.

A concave oil-receiving groove 113a may be formed on a top surface of the edge portion 113, and both end portions of the oil-dripping grooves 112a formed on the top surfaces of the multiple lower supports 112 are connected to the concave oil-receiving groove 113a. The oil-receiving groove 113a may be formed in a circular ring shape on the entire edge portion 113 or on a part thereof.

The multiple upper supports 111 and the multiple lower supports 112 may be inclinedly formed to have lower heights in a direction from a longitudinal center toward the both end portions, that is, toward the oil-receiving groove 113a. A bottom surface of the oil-receiving groove 113a may be in a position lower than the oil-dripping grooves 112a formed on the top surfaces of the multiple lower supports 112. With this structure, the oil dripping down to the oil-dripping grooves 112a may naturally flow down to the oil-receiving groove 113a.

In the bottom plate 110 structured as described above, the multiple upper supports 111 and the multiple lower supports 112 are disposed to have an upper-lower dual structure. However, the multiple upper supports 111 and the multiple lower supports 112 may also be formed integrally using a single metallic plate, as will be described in detail with reference to a method of manufacturing the direct-heat grilling pan 100 according to the present disclosure to be described below.

The sidewall 120 is formed on the circumference of the bottom plate 110 to a predetermined height, and is formed integrally with the bottom plate 110. That is, the sidewall 120 may also be integrated with the bottom plate 110 by using a single metallic plate. The sidewall 120 may have various heights. Although the sidewall 120 is illustrated as having a high height, the sidewall 120 may be formed to a height that prevents the oil in the oil-receiving groove 113a from overflowing.

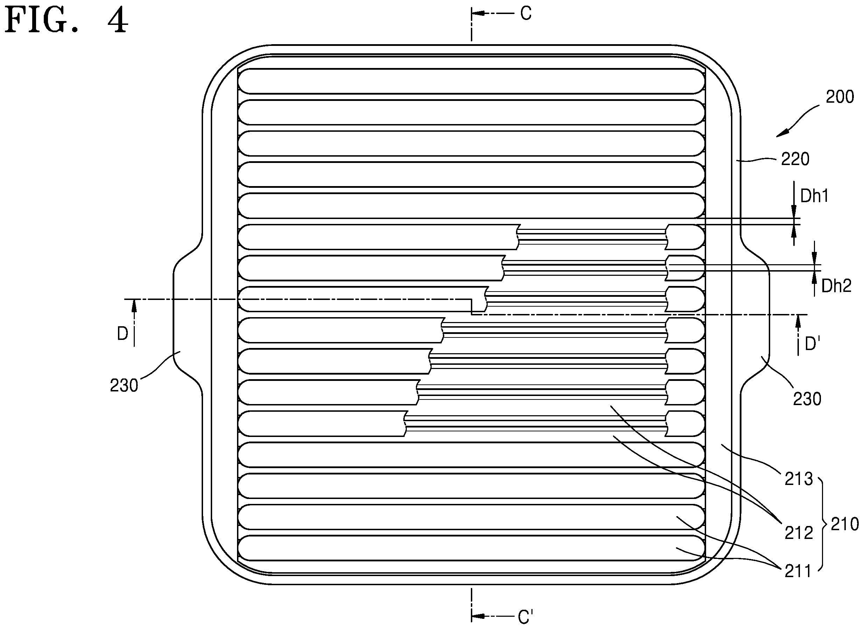

A handle portion 130 for handling the direct-heat grilling pan 100 may be attached to an outer surface of the sidewall 120. In place of the handle portion 130, a handle portion (230 of FIG. 4) may be formed integrally on an upper end portion of the sidewall 120 to protrude outward as shown in FIG. 4.

Hereinafter, a direct-heat grilling pan according to another embodiment of the present disclosure will be described with reference to FIGS. 4 through 6.

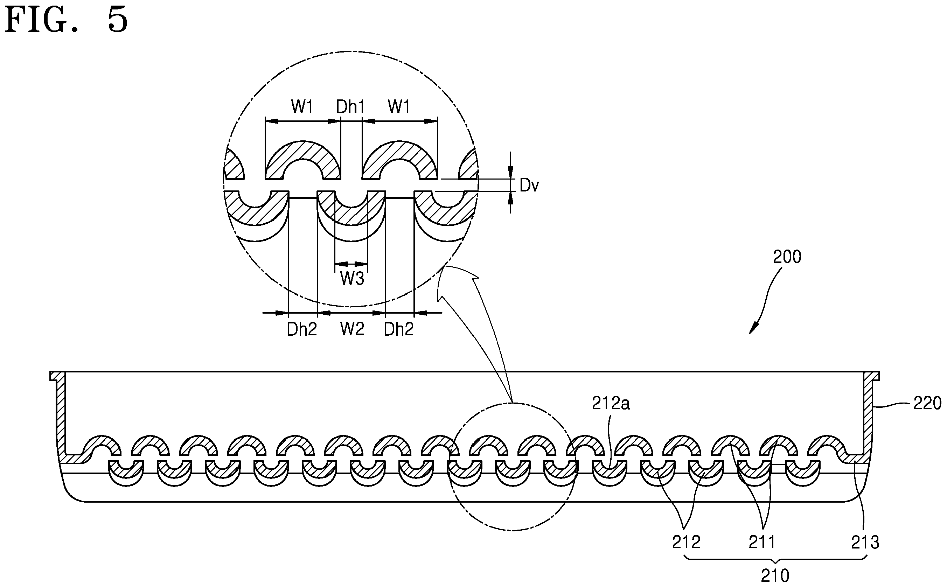

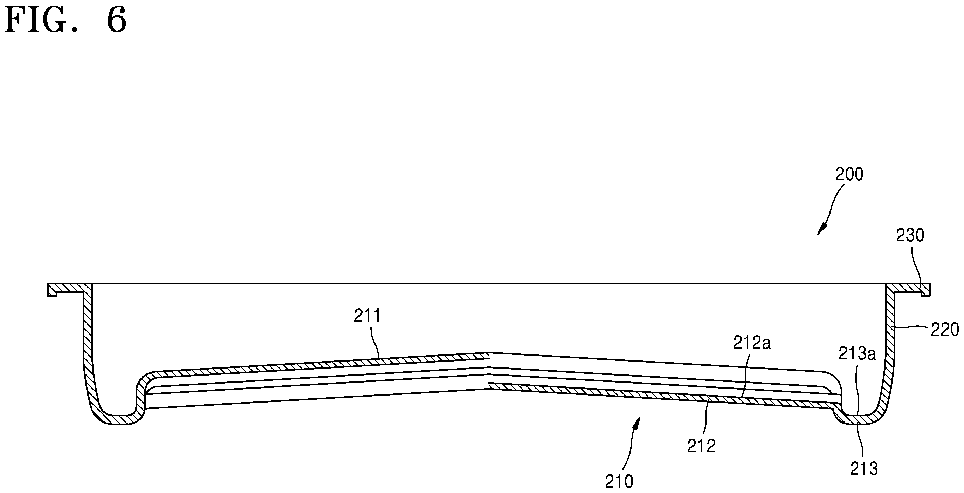

FIG. 4 is a plan view of a direct-heat grilling pan according to another embodiment of the present disclosure, FIG. 5 is a vertical cross-sectional view of a direct-heat grilling pan, cut along a line C - C' shown in FIG. 4, and FIG. 6 is a vertical cross-sectional view of a direct-heat grilling pan, cut along a line D - D' shown in FIG. 4.

Referring to FIGS. 4 through 6, a direct-heat grilling pan 200 according to another embodiment of the present disclosure may include a bottom plate 210 formed to have a dual structure using a single metallic plate and a sidewall 220 formed on a circumference of the bottom plate 210.

More specifically, the bottom plate 210 may include multiple upper supports 211, multiple lower supports 212 disposed under the multiple upper supports 211, and an edge portion 213 surrounding the multiple upper supports 211 and the multiple lower supports 212. The multiple upper supports 211, the multiple lower supports 212, and the edge portion 213 are formed integrally using a single metallic plate, for example, an aluminum plate.

The structure of the direct-heat grilling pan 200 is almost similar with that of the direct-heat grilling pan 100 according to an embodiment of the present disclosure, and thus a detailed description of the same elements will not be provided to avoid repetition.

However, the direct-heat grilling pan 200 according to the current embodiment is different from the direct-heat grilling pan 100 according to the embodiment of the present disclosure in that the bottom plate 210 has a quadrilateral shape with round corners.

As stated above, the bottom plate 210 of the direct-heat grilling pan 200 according to the current embodiment of the present disclosure has a quadrilateral shape with round corners, such that the edge portion 213 also has a quadrilateral ring shape with round corners.

A concave oil-receiving groove 213a is formed in the edge portion 213, and both end portions of the oil-dripping grooves 212a formed on top surfaces of the multiple lower supports 212 are connected to the oil-receiving groove 213a which may be formed in a part of the edge portion 213, more specifically, in a part where the both end portions of the multiple upper supports 211 and the both end portions of the multiple lower supports 212 are connected.

A handle portion 230 for handling the direct-heat grilling pan 200 may be formed integrally on an upper end portion of the sidewall 220 to protrude outward. In place of the handle portion 230, a handle portion (130 of FIG. 1) may be attached to an outer surface of the sidewall 220 as shown in FIG. 1.

The direct-heat grilling pans 100 and 200 according to embodiments of the present disclosure structured as described above may reduce oil by grilling food such as meat or fish in a direct-heating manner, allowing users to enjoy low-calorie food having good taste and flavor.

In particular, the direct-heat grilling pans 100 and 200 according to the present disclosure have the bottom plates 110 and 210 in which the multiple upper supports 111 and 211 and the multiple lower supports 112 and 212 are disposed in an upper-lower dual structure and may be formed integrally by processing one metallic plate. Hence, a part for coupling two plates is not needed, simplifying a structure and lowering a manufacturing cost.

Moreover, the direct-heat grilling pans 100 and 200 according to the present disclosure include a single metallic plate as described above, facilitating heat conduction and thus improving heat efficiency.

In addition to the simple structure, the direct-heat grilling pans 100 and 200 according to the present disclosure has the oil-dripping grooves 112a and 212a formed on the top surfaces of the multiple lower supports 112 and 212 in such a way to be exposed through the first horizontal interval Dh1 between the multiple upper supports 111 and 211, facilitating the washing process.

Hereinafter, a method of manufacturing direct-heat grilling pans according to embodiments of the present disclosure will be described.

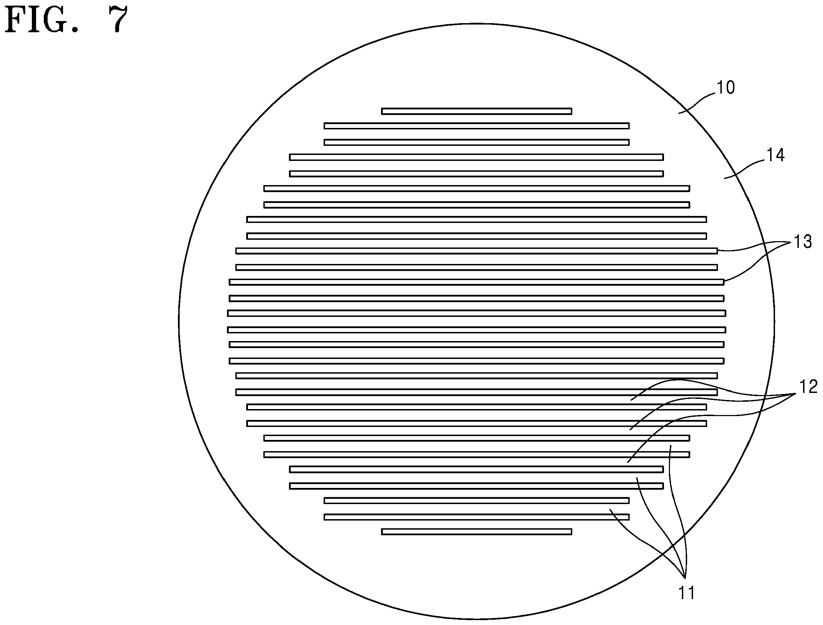

FIG. 7 is a plan view of a metallic plate for manufacturing a direct-heat grilling pan shown in FIGS. 1 through 3, and FIG. 8 is a plan view of a metallic plate for manufacturing a direct-heat grilling pan shown in FIGS. 3 through 6.

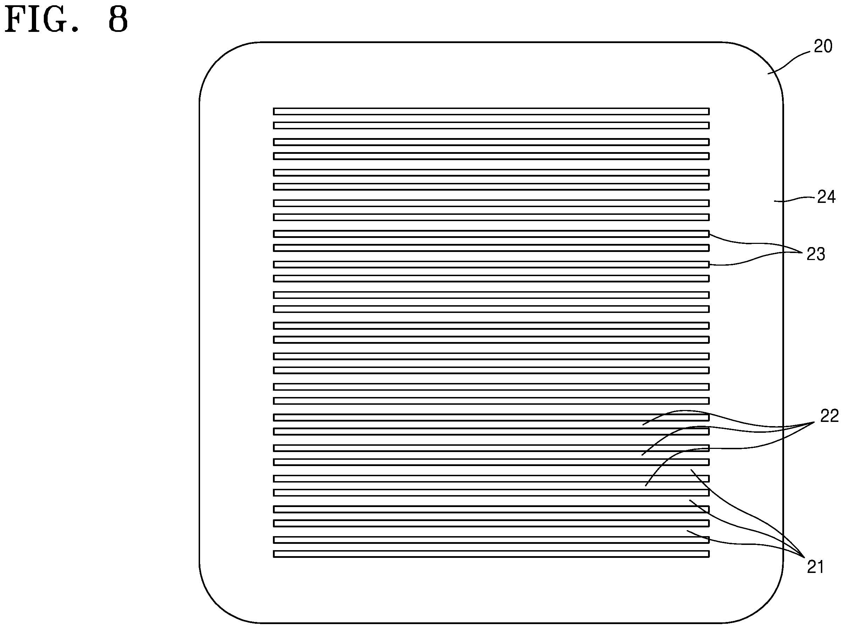

Referring to FIGS. 7 and 8, a metallic plate 10 of FIG. 7 is provided as a base material to manufacture the direct-heat grilling pan 100 shown in FIGS. 1 through 3, and a metallic plate 20 of FIG. 8 is provided as a base material to manufacture the direct-heat grilling pan 200 shown in FIGS. 4 through 6. A circular aluminum plate may be used as the metallic plate 10 of FIG. 7, and a quadrilateral aluminum plate having round corners may be used as the metallic plate 20 of FIG. 8. The thicknesses of the metallic plates 10 and 20 may be about 3 mm.

Multiple holes 13 and 23 in a slot form having a small width and a long length are formed at predetermined intervals on a center portion except for edge portions 14 and 24 of the provided metallic plates 10 and 20. More specifically, the multiple holes 13 and 23 may have a width of about 3 mm and may be formed in parallel with each other.

Then, multiple first portions 11 (or 21) and multiple second portions 12 (or 22) in a bar shape having a small width and a long length are formed alternately with multiple holes 13 (or 23) formed in the metallic plate 10 (or 20) therebetween. The width of the first portion 11 (or 21) and the width of the second portion 12 (or 22) are greater than the width of the hole 13 (or 23). More specifically, the width of the first portion 11 (or 21) may be about 6 mm, and the width of the second portion 12 (or 22) may be about 5 mm, without being limited thereto. That is, the width of the first portion 11 (or 21) and the width of the second portion 12 (or 22) may vary with the entire size of the direct-heat grilling pan 100 (or 200), and may be the same as or different from each other.

The multiple first portions 11 (or 21) of the metallic plate 10 (or 20) structured as described above form the multiple upper supports 111 (or 211) of the bottom plate 110 (or 210) of the direct-heat grilling pan 100 (or 200) through operations described later, and the multiple second portions 12 (or 22) form the multiple lower supports 112 (or 212) of the bottom plate 110 (or 210), and the edge portion 14 (or 24) forms the edge portion 113 (or 213) and the sidewall 120 (or 220) of the bottom plate 110 (or 210).

The following operations will be described based on a method of manufacturing the direct-heat grilling pan 100 shown in FIGS. 1 through 3, and a method of manufacturing the direct-heat grilling pan 200 shown in FIGS. 4 through 6 will be described only in terms of differences.

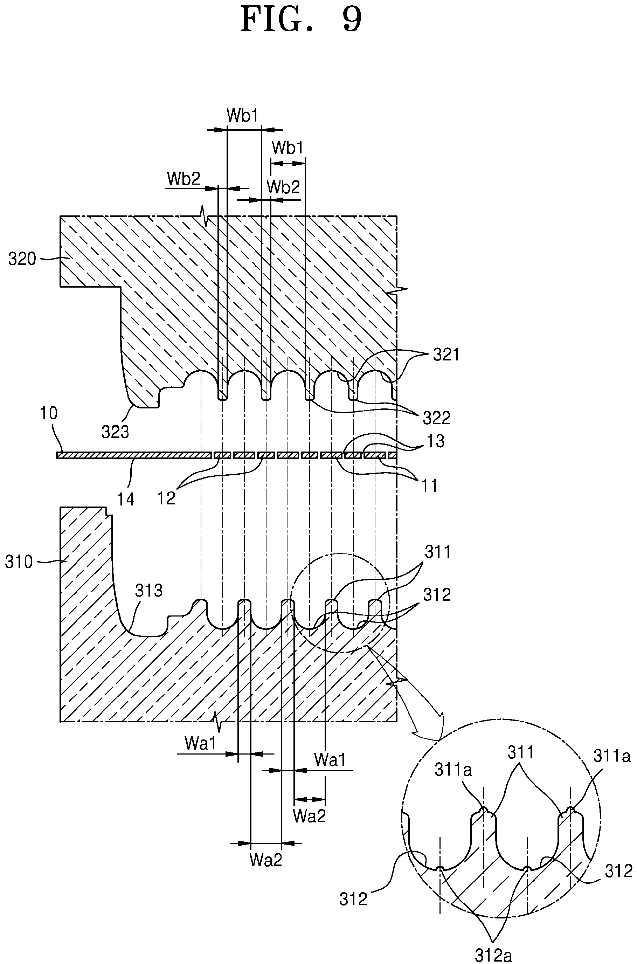

FIG. 9 is a plan view of a lower mold and an upper mold for forming a direct-heat grilling pan shown in FIGS. 1 through 3. The lower mold and the upper mold are bilaterally symmetric to each other, such that only a left part is shown in FIG. 9.

Referring to FIG. 9, a lower mold 310 and an upper mold 320 for forming the direct-heat grilling pan 100 shown in FIGS. 1 through 3 are provided.

Multiple first lower pressing faces 311 and multiple second lower pressing faces 312 are formed on a center portion of a top surface of the lower mold 310, and a third lower pressing face 313 is formed on circumferences of the multiple first lower pressing faces 311 and the multiple second lower pressing faces 312.

The multiple first lower pressing faces 311 and the multiple second lower pressing faces 312 are formed alternately in parallel with each other. The multiple first lower pressing faces 311 are formed convex in a position corresponding to the first portion 11 of the metallic plate 10. The multiple second lower pressing faces 312 are formed concave in a position corresponding to the second portion 12 of the metallic plate 10. The first lower pressing face 311 is formed to have a width Wa1 of about 5 mm and to protrude upward higher than the second lower pressing face 312. The second lower pressing face 312 is formed concave to have a width Wa2 of about 12 mm. The width Wa2 of the second lower pressing face 312 is equal to the width W2 of the lower support 112 of the bottom plate 110 shown in FIG. 2, and the width Wa1 of the first lower pressing face 311 is equal to the second horizontal interval Dh2 between the lower supports 112 shown in FIG. 2.

The third lower pressing face 313 is formed on the circumferences of the multiple first lower pressing faces 311 and the multiple second lower pressing faces 312. The third lower pressing surface 313 is formed concave in a position corresponding to the edge portion 14 of the metallic plate 10.

Multiple first upper pressing faces 321 and multiple second upper pressing faces 322 are formed on a center portion of a bottom surface of the upper mold 320, and a third upper pressing face 323 is formed on circumferences of the multiple first upper pressing faces 321 and the multiple second upper pressing faces 322.

The multiple first upper pressing faces 321 and the multiple second upper pressing faces 322 may be formed alternately in parallel with each another. The multiple first upper pressing faces 321 may be formed concave in a position corresponding to the first portion 11 of the metallic plate 10. The multiple second upper pressing faces 322 may be formed convex in a position corresponding to the second portion 12 of the metallic plate 10. Thus, the concave multiple first upper pressing faces 321 and the convex multiple first lower pressing faces 311 correspond to each other, and the convex multiple second upper pressing faces 322 and the concave multiple second lower pressing faces 312 correspond to each other. The first upper pressing face 321 is formed to have a width Wb1 of about 13 mm, and the second upper pressing face 322 is formed to have a width Wb2 of about 4 mm and to protrude downward lower than the first upper pressing face 321. The width Wb1 of the first upper pressing face 321 is equal to the width W1 of the upper support 111, and the width Wb2 of the second upper pressing face 322 is equal to the first horizontal interval Dh1 between the upper supports 111 shown in FIG. 2.

The third upper pressing face 323 is formed on the circumferences of the multiple first upper pressing faces 321 and the multiple second upper pressing faces 322. The third upper pressing face 323 is formed convex in a position corresponding to the edge portion 14 of the metallic plate 10. Thus, the convex third upper pressing face 323 and the concave third lower pressing face 313 correspond to each other.

The multiple first lower pressing faces 311 and the multiple first upper pressing faces 321 press the first portion 11 of the metallic plate 10 to form the multiple upper supports 111 of the bottom plate 110 of the direct-heat grilling pan 100, and the multiple second lower pressing faces 312 and the multiple second upper pressing faces 322 press the second portion 12 of the metallic plate 10 to form the multiple lower supports 112 of the bottom plate 110. The third lower pressing face 313 and the third upper pressing face 323 press the edge portion 14 of the metallic plate 10 to form the edge portion 113 and the sidewall 120 of the bottom plate 110.

In widthwise center portions of the multiple first lower pressing faces 311 and the multiple second lower pressing faces 312 formed on the lower mold 310, convex protrusions 311 a and 312a may be formed.

The protrusions 311 a and 312a extend longitudinally long along the first lower pressing faces 311 and the second lower pressing faces 312, respectively, and have a height less than a half of the thickness of the metallic plate 10. The protrusions 311 a and 312a prevent the first portion 11 and the second portion 12 from leaving their own positions by sliding when the first portion 11 and the second portion 12 of the metallic plate 10 are formed by being pressed between the first and second lower pressing faces 311 and 312 and the first and second upper pressing faces 321 and 322.

The metallic plate 10 is disposed between the lower mold 310 and the upper mold 320. In this state, the metallic plate 10 is disposed such that a widthwise center of the first portion 11 of the metallic plate 10 is positioned on a central line connecting a widthwise center of the first lower pressing face 311 with a widthwise center of the first upper pressing face 321 and a widthwise center of the second portion 12 is positioned on a central line connecting a widthwise center of the second lower pressing face 312 with a widthwise center of the second upper pressing face 322.

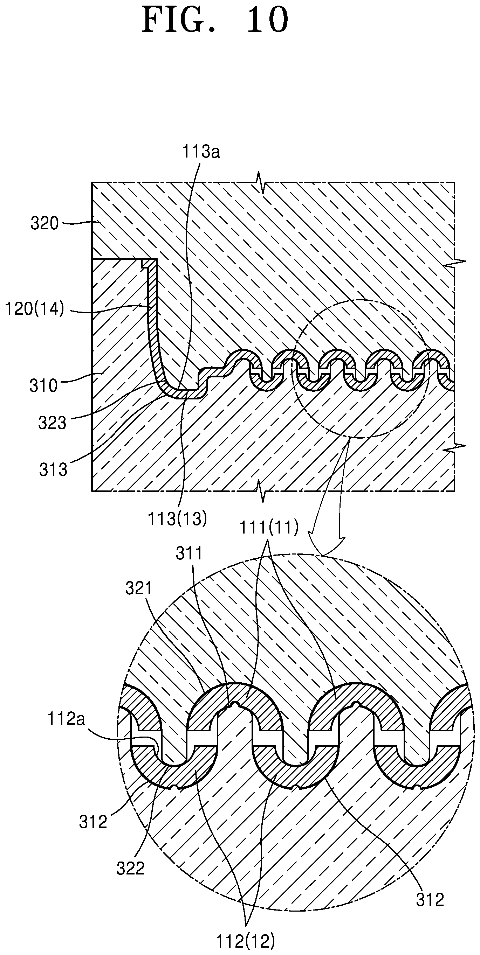

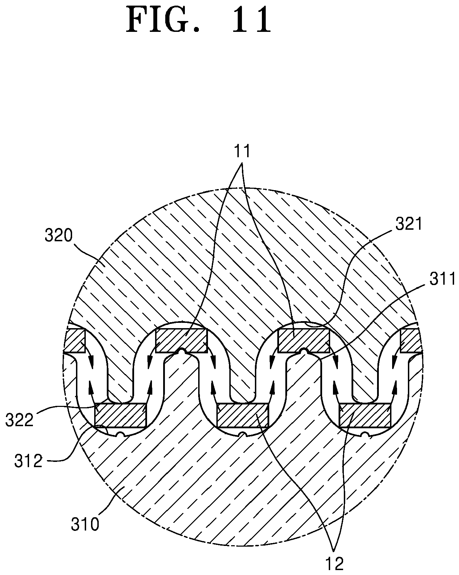

FIG. 10 is a cross-sectional view showing a state wherein a metallic plate shown in FIG. 7 is transformed by being pressurized between a lower mold and an upper mold shown in FIG. 9 and thus a direct-heat grilling pan shown in FIGS. 1 through 3 is formed, and FIG. 11 is a view for describing an intermediate process in which an upper support and a lower support for a bottom plate are formed from a first part and a second part of a metallic plate.

Referring to FIG. 10, the lower mold 310 is lifted or the upper mold 320 is lowered in such a way to deform, by pressing, the metallic plate 10 between the first, second, and third lower pressing faces 311, 312, and 313 of the lower mold 310 and the first, second, and third upper pressing faces 321, 322, and 323 of the upper mold 320, thereby integrally forming the bottom plate 110 and the sidewall 120 with each other.

More specifically, as the first portion 11 of the metallic plate 10 is pressed between the first lower pressing face 311 and the first upper pressing face 321, the width of the first portion 11 of the metallic plate 10 increases, forming the upper support 111 of the bottom plate 110. When the first lower pressing face 311 is formed convex and the first upper pressing face 321 is formed concave, the top surface of the first portion 11 of the metallic plate 10 becomes convex by being pressed, thus forming the upper supports 111 having a convex top surface.

As a width of the second portion 12 of the metallic plate 10 increases between the second lower pressing face 312 and the second upper pressing face 322, a top surface of the second portion 12 becomes concave when pressed, thus forming the lower supports 112 and the oil-dripping grooves 112a of the bottom plate 110. A top surface of the edge portion 14 of the metallic plate 10 becomes concave when pressed between the third lower pressing face 313 and the third upper pressing face 323, thus forming the edge portion 113, the oil-receiving groove 113a, and the sidewall 120 of the bottom plate 110.

In a process of forming the bottom plate 110 and the sidewall 120, the handle portion 230 as shown in FIG. 4 may be formed on the top end portion of the sidewall 120 or the handle portion 130 as shown in FIG. 1 may be attached onto an outer surface of the molded sidewall 120.

Hereinbelow, an intermediate process of forming the upper supports 111 and the lower supports 112 of the bottom plate 100 from the first portions 11 and the second portions 12 will be described in more detail.

As shown in FIG. 11, for example, if the lower mold 310 is lifted, the first portion 11 of the metallic plate 10 is lifted higher than the second portion 12 by the first lower pressing face 311 of the lower mold 310, thus being placed between the first lower pressing face 311 of the lower mold 310 and the first upper pressing face 321 of the upper mold 320, and the second portion 12 is placed lower than the first portion 11 between the second lower pressing face 312 of the lower mold 310 and the second upper pressing face 322 of the upper mold 320.

In this state, if the lower mold 310 continues being lifted, a width of the first portion 11 of the metallic plate 10 increases by being pressed between the first lower pressing face 311 of the lower mold 310 and the first upper pressing face 321 of the upper mold 320. The width of the first portion 11 may increase, from about 6 mm, to about 13mm that is equal to the width Wb1 of the first upper pressing face 321 as shown in FIG. 10. As the width of the first portion 11 of the metallic plate 10 increases, the top surface of the first portion 11 becomes convex by being pressed, thus forming the upper supports 111 having a width (W1 of FIG. 2) of about 13 mm. As the width of the first portion 11 increases, an interval between adjacent first portions 11 is reduced to about 4 mm, forming a first horizontal interval (Dh1 of FIG. 2) between the upper supports 111.

As the second portion 12 of the metallic plate 10 is pressed between the second lower pressing face 312 of the lower mold 310 and the second upper pressing face 322 of the upper mold 320, the width of the second portion 12 increases. The width of the second portion 12 may increase, from about 5 mm, to about 12 mm that is equal to the width Wa2 of the second lower pressing face 312 as shown in FIG. 10. As the width of the second portion 12 increases, a top surface of the second portion 12 is bent in a concave form along the concave second lower pressing face 312. As such, the top surface of the second portion 12 of the metallic plate 10 becomes concave by being pressed as the width of the second portion 12 of the metallic plate 10 increases, thus forming the lower supports 112 having a width (W2 of FIG. 2) of about 12 mm and the oil-dripping grooves 112a on the top surfaces of the lower supports 112. As the width of the second portion 12 increases, an interval between adjacent second portions 12 is reduced to about 5 mm, thus forming a second horizontal interval (Dh2 of FIG. 2) between the lower supports 112.

With the above-described method for manufacturing the direct-heat grilling pan according to the present disclosure, by using the lower mold 310 and the upper mold 320 structured as described above, the single metallic plate 10 is formed, thereby manufacturing the direct-heat grilling pans 100 and 200 having the bottom plates 110 and 210 with an upper-lower dual structure in which the multiple upper supports 111 and 211 and the multiple lower supports 112 and 212 are disposed vertically.

As is apparent from the foregoing description, the direct-heat grilling pan according to the present disclosure reduces oil by grilling food such as meat or fish in a direct-heating manner, allowing users to enjoy low-calorie food having good taste and flavor.

In particular, the direct-heat grilling pan according to the present disclosure has a bottom plate with an upper-lower dual structure in which multiple upper supports and multiple lower supports are disposed vertically, but may be formed integrally by processing a single metallic plate, avoiding a need for a portion for coupling two plates and thus simplifying a structure and reducing a manufacturing cost.

Moreover, the direct-heat grilling pan according to the present disclosure is formed of a single metallic plate, facilitating heat conduction and thus improving heat efficiency.

Furthermore, in addition to the simple structure as described above, the direct-heat grilling pan according to the present disclosure also has oil-dripping grooves on the top surfaces of the multiple lower supports, which are exposed through first horizontal intervals between the multiple upper supports, making it easy to wash the direct-heat grilling pan.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the inventive concept as defined by the following claims.

## Claims

1. A direct-heat grilling pan (100, 200) comprising:
a bottom plate (110, 210) ; and
a sidewall (120, 220) formed on a circumference of the bottom plate (110, 210);
**characterized in that** the bottom plate (110, 210) comprises:
multiple upper supports (111, 211) disposed with a first horizontal interval (Dh1) therebetween;
multiple lower supports (112, 212) disposed with a second horizontal interval (Dh2) therebetween, disposed with a vertical interval (Dv) from the multiple upper supports (111, 211) and positioned directly under the first horizontal interval (Dh1), having a width (W2) greater than the first horizontal interval (Dh1), and having concave oil-dripping grooves (112a, 212a) formed in top surfaces thereof to receive oil dripping down through the first horizontal interval (Dh1); and
an edge portion (113, 213) surrounding the multiple upper supports (111, 211) and the multiple lower supports (112, 212) while connecting both end portions of the multiple upper supports (111, 211) and both end portions of the multiple lower supports (112, 212), and on a top surface in which a concave oil-receiving groove (113a, 213a) connected to the oil-dripping grooves (112a, 212a) is formed;
wherein the bottom plate (110, 210) and the sidewall (120, 220) are formed integrally of a single metallic plate.

2. The direct-heat grilling pan of claim 1, wherein top surfaces of the multiple upper supports (111, 211) are convex and a width (W1) of the upper supports (111, 211 ) is greater than the first horizontal interval (Dh1).

3. The direct-heat grilling pan of claim 1, wherein a width (W3) of the oil-dripping grooves (112a, 212a) is equal to or greater than the first horizontal interval (Dh1).

4. The direct-heat grilling pan of claim 1, wherein the multiple upper supports (111, 211) and the multiple lower supports (112, 212) are formed inclinedly so that heights are lower in a direction from longitudinal centers of the multiple upper supports (111, 211) and the multiple lower supports (112, 212) toward the both end portions of the multiple upper supports (111, 211) and the multiple lower supports. (112, 212).

5. The direct-heat grilling pan of claim 1, wherein a bottom surface of the oil-receiving groove (113a, 213a) is lower than the oil-dripping grooves (112a, 212a).

6. The direct-heat grilling pan of claim 1, wherein the bottom plate (110, 210) has a circular shape or a quadrilateral shape with round corners.

7. The direct-heat grilling pan of claim 1, wherein a handle portion (130, 230) is formed to protrude outward from an upper end portion of the sidewall (120, 220) or is attached to an outer surface of the sidewall (120, 220).

8. A method of manufacturing the direct-heat grilling pan (100, 200) of claim 1, the method comprising:
forming multiple holes (13, 23) in a slot shape in parallel with each other and with an interval therebetween in a center portion except for an edge portion (14, 24) of a metallic plate (10, 20), thereby alternately forming one by one multiple first portions (11, 21) and multiple second portions (12, 22) having the multiple holes (13, 23) therebetween;
providing a lower mold (310) and an upper mold (320);
disposing the metallic plate (10, 20) between the lower mold (310) and the upper mold (320); and
lifting the lower mold (310) or lowering the upper mold (320) to transform the metallic plate (10, 20) by pressing the metallic plate (10, 20) to form the bottom plate (110, 210) and the sidewall (120, 220),
wherein in the forming the bottom plate (110, 210) and the sidewall (120, 220),
the multiple first portions (11, 21) of the metallic plate (10, 20) have a width that increases as the multiple first portions (11, 21) are pressed in a position higher than the multiple second portions (12, 22), thereby forming multiple upper supports (111, 211) of the bottom plate (110, 210); and
the multiple second portions (12, 22) of the metallic plate (10, 20) have a width that increases beyond the first horizontal interval (Dh1) as the multiple second portions (12, 22) are pressed in a position lower than the multiple first portions (11, 21), such that top surfaces of the multiple second portions (12, 22) are transformed to have a concave shape and form oil-dripping grooves (112a, 212a) with multiple lower supports (112, 212) of the bottom plate (110, 210), and
the edge portion (14, 24) of the metallic plate (10, 20) is transformed to have a concave shape by being pressed to form the oil-receiving groove (113a, 213a), the sidewall (120, 220), and the edge portion (113, 213) of the bottom plate (110, 210).

9. The method of claim 8, wherein the metallic plate (10, 20) has a circular shape or a quadrilateral shape with round corners, and the width of the first portions (11, 21) of the metallic plate (10, 20) and the width of the second portions (12, 22) of the metallic plate (10, 20) are greater than a width of the multiple holes (13,23).

10. The method of claim 8, wherein the providing of the lower mold (310) and the upper mold (320) comprises:
alternately forming one by one multiple first lower pressing faces (311) and concave multiple second lower pressing faces (312) on a top surface of the lower mold (310) and forming a concave third lower pressing face (313) on circumferences of the multiple first lower pressing faces (311) and the multiple second lower pressing faces (312); and
alternately forming one by one multiple first upper pressing faces (321) corresponding to the multiple first lower pressing faces (311) and convex multiple second upper pressing faces (322) corresponding to the multiple second lower pressing faces (312) on a bottom surface of the upper mold (320) and forming a convex third upper pressing face (323) corresponding to the third lower pressing face (313) on circumferences of the multiple first upper pressing faces (321) and the multiple second upper pressing faces (322).

11. The method of claim 10, wherein the disposing of the metallic plate (10, 20) between the lower mold (310) and the upper mold (320) comprises:
disposing the metallic plate (10, 20) such that a center of the multiple first portions (11, 21) of the metallic plate (10, 20) is on a central line of the first lower pressing faces (311) and the first upper pressing faces (321) and a center of the multiple second portions (12, 22) of the metallic plate (10, 20) is on a central line of the second lower pressing faces (312) and the second upper pressing faces (322).

12. The method of claim 10, wherein the first lower pressing faces (311) are convex and the first upper pressing faces (321) are concave, such that top surfaces of the multiple upper supports (111, 211) are convex.

13. The method of claim 10, wherein a width of the second lower pressing faces (312) is equal to a width of the lower supports (112, 212), a width of the first lower pressing faces (311) is equal to the second horizontal interval (Dh2), a width of the first upper pressing faces (321) is equal to a width of the upper supports (111, 211), and a width of the second upper pressing faces (322) is equal to the first horizontal interval (Dh1).

14. The method of claim 10, wherein convex protrusions (311a, 312a) are formed in a center of the first lower pressing faces (311) and a center of the second lower pressing faces (312).

15. The method of claim 14, wherein the protrusions (311a, 312a) extend in a longitudinal direction of the first lower pressing faces (311) and the second lower pressing faces (312) and have a height less than a half of a thickness of the metallic plate (10, 20).

## Patentansprüche

1. Direkthitze-Grillpfanne (100, 200) umfassend:
eine Bodenplatte (110, 210); und
eine Seitenwand (120, 220), ausgebildet am Umfang der Bodenplatte (110, 210);
**dadurch gekennzeichnet, dass** die Bodenplatte (110, 210) umfasst:
eine Vielzahl oberer Stützelemente (111, 211), die in einem ersten horizontalen Abstand (Dh1) voneinander angeordnet sind;
eine Vielzahl unterer Stützelemente (112, 212), die in einem zweiten horizontalen Abstand (Dh2) voneinander und die in einem vertikalen Abstand (Dv) von der Vielzahl oberer Stützelemente (111, 211) angeordnet sind und direkt unter dem ersten horizontalen Abstand (Dh1) positioniert sind, wobei sie eine Breite (W2), die größer ist als der erste horizontale Abstand (Dh1), und konkave Ölablaufrillen (112a, 212a) aufweisen, die in den Oberseiten dieser ausgebildet sind, zur Aufnahme von Öl, welches durch den ersten horizontalen Abstand (Dh1) nach unten tropft; und
einen Randabschnitt (113, 213), der die Vielzahl oberer Stützelemente (111, 211) und die Vielzahl unterer Stützelemente (112, 212) umrandet, und gleichzeitig beide Endabschnitte der Vielzahl oberer Stützelemente (111, 211) mit beiden Endabschnitten der Vielzahl unterer Stützelemente (112, 212) verbindet, und eine Oberseite aufweist, in die eine konkave Öl aufnehmende Vertiefung (113a, 213a) hinein geformt ist, die mit den Ölablaufrillen (112a, 212a) verbunden ist;
wobei die Bodenplatte (110, 210) und die Seitenwand (120, 220) einstückig aus einer einzigen Metallplatte geformt sind.

2. Direkthitze-Grillpfanne gemäß Anspruch 1, wobei die Oberseiten der Vielzahl oberer Stützelemente (111, 211) konvex sind und eine Breite (W1) der oberen Stützelemente (111, 211) größer ist als der erste horizontale Abstand (Dh1).

3. Direkthitze-Grillpfanne gemäß Anspruch 1, wobei eine Breite (W3) der Ölablaufrillen (112a, 212a) gleich oder größer ist als der erste horizontale Abstand (Dh1).

4. Direkthitze-Grillpfanne gemäß Anspruch 1, wobei die Vielzahl oberer Stützelemente (111, 211) und die Vielzahl unterer Stützelemente (112, 212) abgeschrägt ausgebildet sind, so dass die Höhen ausgehend von den längs gerichteten Mitten der Vielzahl oberer Stützelemente (111, 211) und der Vielzahl unterer Stützelemente (112, 212) hin zu den beiden Endabschnitten der Vielzahl oberer Stützelemente (111, 211) und der Vielzahl unterer Stützelemente niedriger werden.

5. Direkthitze-Grillpfanne gemäß Anspruch 1, wobei eine Bodenfläche der Öl aufnehmenden Vertiefung (113a, 213 a) niedriger ist als die Ölaufnahmerillen (112a, 212a).

6. Direkthitze-Grillpfanne gemäß Anspruch 1, wobei die Bodenplatte (110, 210) eine kreisrunde oder eine quadratische Form mit runden Ecken hat.

7. Direkthitze-Grillpfanne gemäß Anspruch 1, wobei ein Griffteil (130, 230) ausgebildet ist, welches außen aus einem oberen Endabschnitt der Seitenwand (120, 220) herausragt oder an einer äußeren Fläche der Seitenwand (120, 220) angebracht ist.

8. Verfahren zur Herstellung einer Direkthitze-Grillpfanne (100, 200) gemäß Anspruch 1, umfassend:
Ausformen einer Vielzahl von Lücken (13, 23) in einer Schlitzform parallel zu einander und in einem gleichmäßigen Abstand voneinander in einen mittigen Abschnitt mit Ausnahme eines Randabschnittes (14, 24) einer Metallplatte (10, 20), wobei abwechselnd nacheinander mehrere erste Abschnitte (11, 21) und mehrere zweite Abschnitte (12, 22) geformt werden, mit der Vielzahl an Lücken dazwischen;
Zur Verfügung stellen einer unteren Pressform (310) und einer oberen Pressform (320);
Einfügen einer Metallplatte (10, 20) zwischen der unteren Form (310) und der oberen Form (320); und
Hochdrücken der unteren Form (310) oder Herunterdrücken der oberen Form (320), um die Metallplatte (10, 20) umzuformen durch Pressen der Metallplatte (10, 20), um die Bodenplatte (110, 210) und die Seitenwand (120, 220) zu formen,
wobei bei Ausformung der Bodenplatte (110, 210) und der Seitenwand (120, 220)
die Vielzahl erster Abschnitte (11, 21) der Metallplatte (10, 20) breiter werden, wenn die Vielzahl erster Abschnitte (11, 21) in eine höhere Position als die Vielzahl zweiter Abschnitte (12, 22) gcprcsst werden, wodurch mehrere obere Stützelemente (111, 211) der Bodenplatte (110, 210) geformt werden; und
die Vielzahl zweiter Abschnitte (12, 22) der Metallplatte (10, 20) eine Breite haben, die über den ersten horizontalen Abstand (Dh 1) hinausgeht, wenn die Vielzahl zweiter Abschnitte (12, 22) in eine Position gepresst wird, die niedriger ist als die Position der Vielzahl erster Abschnitte (11, 21), so dass die Oberseiten der Vielzahl zweiter Abschnitte (12, 22) eine konkave Form annehmen und mit der Vielzahl unterer Stützelemente (112, 212) der Bodenplatte (110, 210) Ölablaufrillen (112a, 212a) bilden, und
der Randabschnitt (14, 24) der Metallplatte (10, 20) in eine konkave Form umgeformt wird, indem er gepresst wird, um die Öl aufnehmenden Rillen (113a, 213 a), die Seitenwand (120, 220) und den Randabschnitt (113, 213) der Bodenplatte (110, 210) auszubilden.

9. Verfahren gemäß Anspruch 8, wobei die Metallplatte (10, 20) eine kreisrunde oder eine quadratische Form mit runden Ecken hat, und die Breite der ersten Abschnitte (11, 21) der Metallplatte (10, 20) und die Breite der zweiten Abschnitte (12, 22) der Metallplatte (10, 20) größer sind als eine Breite der Vielzahl an Lücken (13, 23).

10. Verfahren gemäß Anspruch 8, wobei die Zurverfügungstellung der unteren Pressform (310) und der oberen Pressform (320) umfasst:
Abwechselndes Ausformen einer Vielzahl erster unterer Pressflächen (311) und einer Vielzahl konkaver zweiter unterer Pressflächen (312) nacheinander auf einer Oberseite der unteren Pressform (310) und Ausformen einer konkaven dritten unteren Pressfläche (313) auf Umfangflächen der Vielzahl erster unterer Pressflächen (311) und der Vielzahl zweiter unterer Pressflächen (312); und
Abwechselndes Ausformen einer Vielzahl erster oberer Pressflächen (321), die der Vielzahl erster unterer Pressflächen (311) entspricht, und einer Vielzahl konvexer zweiter oberer Pressflächen (322), die der Vielzahl zweiter unterer Pressflächen (312) auf einer Bodenfläche der oberen Pressform (320) entspricht, und Ausformen einer konvexen dritten oberen Pressfläche (323), die der dritten unteren Pressfläche (313) auf den Umfangflächen der Vielzahl erster oberer Pressflächen (321) und der Vielzahl zweiter oberer Pressflächen (322) entspricht.

11. Verfahren gemäß Anspruch 10, wobei die Anordnung der Metallplatte (10, 20) zwischen der unteren Pressform (310) und der oberen Pressform (320) umfasst:
Anordnen der Metallplatte (10, 20) so, dass sich eine Mitte der Vielzahl erster Abschnitte (11,21) der Metallplatte (10, 20) auf einer Mittellinie der ersten unteren Pressflächen (311) und der ersten oberen Presseflächen (321) befindet und sich eine Mitte der Vielzahl zweiter Abschnitte (12, 22) der Metallplatte (10, 20) auf einer Mittellinie der zweiten unteren Pressflächen (312) und der zweiten oberen Presseflächen (322) befindet.

12. Verfahren gemäß Anspruch 10, wobei die ersten unteren Pressflächen (311) konvex und die ersten oberen Pressflächen (321) konkav sind, so dass Oberseiten der Vielzahl oberer Stützelemente (111, 211) konvex sind.

13. Verfahren gemäß Anspruch 10, wobei eine Breite der zweiten unteren Pressflächen (312) gleich einer Breite der unteren Stützelemente (112, 212) ist, eine Breite der ersten unteren Pressflächen (311) gleich dem zweiten horizontalen Abstand (Dh2) ist, eine Breite der ersten oberen Pressflächen (321) gleich einer Breite der oberen Stützelemente (111, 211) ist, und eine Breite der zweiten oberen Pressflächen (322) gleich dem ersten horizontalen Abstand (Dh1) ist.

14. Verfahren gemäß Anspruch 10, wobei konvexe Vorsprünge (311a, 312a) in einer Mitte der ersten unteren Pressflächen (311) und einer Mitte der zweiten unteren Pressflächen (312) ausgeformt sind.

15. Verfahren gemäß Anspruch 14, wobei sich die Vorsprünge (311a, 312a) in Längsrichtung ausgehend von den ersten unteren Pressflächen (311) und den zweiten unteren Pressflächen (312) erstrecken und weniger als halb so hoch sind wie die Dicke der Metallplatte (10, 20).

## Revendications

1. Bac à grillade à chaleur directe (100, 200), comprenant :
une plaque de fond (110, 210) ; et
une paroi latérale (120, 220) formée sur une circonférence de la plaque de fond (110, 210) ;
**caractérisé en ce que** la plaque de fond (110, 210) comprend :
de multiples supports supérieurs (111, 211) disposés avec un premier intervalle horizontal (Dh1) entre eux ;
de multiples supports inférieurs (112, 212) disposés avec un deuxième intervalle horizontal (Dh2) entre eux, disposés avec un intervalle vertical (Dv) par rapport aux multiples supports supérieurs (111, 211) et positionnés directement sous le premier intervalle horizontal (Dh1), ayant une largeur (W2) supérieure au premier intervalle horizontal (Dh1), et ayant des rainures d'égouttage d'huile concaves (112a, 212a) formées dans des surfaces supérieures de ceux-ci pour recevoir l'huile tombant par le premier intervalle horizontal (Dh1) ; et
une partie bord (113, 213) entourant les multiples supports supérieurs (111, 211) et les multiples supports inférieurs (112, 212) tout en reliant les deux parties d'extrémité des multiples supports supérieurs (111, 211) et les deux parties d'extrémité des multiples supports inférieurs (112, 212), et sur une surface supérieure dans laquelle est formée une rainure de réception d'huile concave (113a, 213a) reliée aux rainures d'égouttage d'huile (112a, 212a) ;
dans lequel la plaque de fond (110, 210) et la paroi latérale (120, 220) sont formées d'un seul tenant d'une plaque métallique unique.

2. Bac à grillade à chaleur directe selon la revendication 1, dans lequel les surfaces supérieures des multiples supports supérieurs (111, 211) sont convexes et une largeur (W1) des supports supérieurs (111, 211) est supérieure au premier intervalle horizontal (Dh1).

3. Bac à grillade à chaleur directe selon la revendication 1, dans lequel une largeur (W3) des rainures d'égouttage d'huile (112a, 212a) est supérieure ou égale au premier intervalle horizontal (Dh1).

4. Bac à grillade à chaleur directe selon la revendication 1, dans lequel les multiples supports supérieurs (111, 211) et les multiples supports inférieurs (112, 212) sont formés de façon inclinée de telle sorte que les hauteurs sont inférieures dans une direction partant des centres longitudinaux des multiples supports supérieurs (111, 211) et des multiples supports inférieurs (112, 212) vers les deux parties d'extrémité des multiples supports supérieurs (111, 211) et des multiples supports inférieurs.

5. Bac à grillade à chaleur directe selon la revendication 1, dans lequel une surface inférieure de la rainure de réception d'huile (113a, 213a) est plus basse que les rainures d'égouttage d'huile (112a, 212a).

6. Bac à grillade à chaleur directe selon la revendication 1, dans lequel la plaque de fond (110, 210) a une forme circulaire ou une forme quadrilatérale à coins ronds.

7. Bac à grillade à chaleur directe selon la revendication 1, dans lequel une partie manche (130, 230) est formée pour faire saillie vers l'extérieur depuis une partie d'extrémité supérieure de la paroi latérale (120, 220) ou est attachée à une surface extérieure de la paroi latérale (120, 220).

8. Procédé de fabrication du bac à grillade à chaleur directe (100, 200) selon la revendication 1, le procédé comprenant :
la formation de multiples trous (13, 23) selon une forme de fente parallèlement les uns aux autres et avec un intervalle entre eux dans une partie centrale à l'exception d'une partie bord (14, 24) d'une plaque métallique (10, 20), formant ainsi en alternance une par une de multiples premières parties (11, 21) et de multiples deuxièmes parties (12, 22) ayant les multiples trous (13, 13) entre elles ;
la fourniture d'un moule inférieur (310) et d'un moule supérieur (320) ;
la disposition de la plaque métallique (10, 20) entre le moule inférieur (310) et le moule supérieur (320) ; et
l'élévation du moule inférieur (310) ou l'abaissement du moule supérieur (320) afin de transformer la plaque métallique (10, 20) en pressant la plaque métallique (10, 20) pour former la plaque de fond (110, 210) et la paroi latérale (120, 220),
dans lequel, lors de la formation de la plaque de fond (110, 210) et de la paroi latérale (120, 220),
les multiples premières parties (11, 21) de la plaque métallique (10, 20) ont une largeur qui augmente quand les multiples premières parties (11, 21) sont pressées dans une position plus élevée que les multiples deuxièmes parties (12, 22), formant ainsi de multiples supports supérieurs (111, 211) de la plaque de fond (110, 210) ; et
les multiples deuxièmes parties (12, 22) de la plaque métallique (10, 20) ont une largeur qui augmente au-delà du premier intervalle horizontal (Dh1) quand les multiples deuxièmes parties (12, 22) sont pressées dans une position plus basse que les multiples premières parties (11, 21), de telle sorte que les surfaces supérieures des multiples deuxièmes parties (12, 22) sont transformées pour avoir une forme concave et former des rainures d'égouttage d'huile (112a, 212a) avec les multiples supports inférieures (112, 212) de la plaque de fond (110, 210), et
la partie bord (14, 24) de la plaque métallique (10, 20) est transformée pour avoir une forme concave en étant pressé pour former la rainure de réception d'huile (113a, 213a), la paroi latérale (120, 220) et la partie bord (113, 213) de la plaque de fond (110, 210).

9. Procédé selon la revendication 8, dans lequel la plaque métallique (10, 20) a une forme circulaire ou une forme quadrilatérale à coins ronds, et la largeur des premières parties (11, 21) de la plaque métallique (10, 20) et la largeur des deuxièmes parties (12, 22) de la plaque métallique (10, 20) sont supérieures à une largeur des multiples trous (13, 23).

10. Procédé selon la revendication 8, dans lequel la fourniture du moule inférieur (310) et du moule supérieur (320) comprend :
la formation en alternance une par une de multiples premières faces de pressage inférieures (311) et de multiples deuxièmes faces de pressage inférieures concaves (312) sur une surface supérieure du moule inférieur (310) et la formation d'une troisième face de pressage inférieure concave (313) sur les circonférences des multiples premières faces de pressage inférieures (311) et des multiples deuxièmes faces de pressage inférieures (312) ; et
la formation en alternance une par une de multiples premières faces de pressage supérieures (321) correspondant aux multiples premières faces de pressage inférieures (311) et de multiples deuxièmes faces de pressage supérieures concaves (322) correspondant aux multiples deuxièmes faces de pressage supérieures (312) sur une surface inférieure du moule supérieur (320) et la formation d'une troisième face de pressage supérieure concave (323) correspondant à la troisième face de pressage inférieure (313) sur les circonférences des multiples premières faces de pressage supérieures (321) et des multiples deuxièmes faces de pressage supérieures (322).

11. Procédé selon la revendication 10, dans lequel la disposition de la plaque métallique (10, 20) entre le moule inférieur (310) et le moule supérieur (320) comprend :
la disposition de la plaque métallique (10, 20) de telle sorte qu'un centre des multiples premières parties (11, 21) de la plaque métallique (10, 20) se trouve sur une ligne médiane des premières faces de pressage inférieures (311) et des premières faces de pressage supérieures (321) et un centre des multiples deuxièmes parties (12, 22) de la plaque métallique (10, 20) se trouve sur une ligne médiane des deuxièmes faces de pressage inférieures (312) et des deuxièmes faces de pressage supérieures (322).

12. Procédé selon la revendication 10, dans lequel les premières faces de pressage inférieures (311) sont convexes et les premières faces de pressage supérieures (321) sont concaves, de telle sorte que les surfaces supérieures des multiples supports supérieurs (111, 211) sont convexes.

13. Procédé selon la revendication 10, dans lequel une largeur des deuxièmes faces de pressage inférieures (312) est égale à une largeur des supports inférieurs (112, 212), une largeur des premières faces de pressage inférieures (311) est égale au deuxième intervalle horizontal (Dh2), une largeur des premières faces de pressage supérieures (321) est égale à une largeur des supports supérieurs (111, 211) et une largeur des deuxièmes faces de pressage supérieures (322) est égale au premier intervalle horizontal (Dh1).

14. Procédé selon la revendication 10, dans lequel des saillies convexes (311a, 321a) sont formées dans un centre des premières faces de pressage inférieures (311) et un centre des deuxièmes faces de pressage inférieures (312).

15. Procédé selon la revendication 14, dans lequel les saillies (311a, 312a) s'étendent dans une direction longitudinale des premières faces de pressage inférieures (311) et des deuxièmes faces de pressage inférieures (312) et ont une hauteur inférieure à une moitié d'une épaisseur de la plaque métallique (10, 20).
